# EUROPÄISCHE PATENTSCHRIFT

(11) **EP 0 801 804 B1**
(45) Veröffentlichungstag und Bekanntmachung des Hinweises auf die Patenterteilung: **16.09.1998**
(21) Anmeldenummer: 95910388.8
(22) Anmeldetag: 06.02.1995
(51) Int. Cl.: H01H 79/00, H01H 9/50

(54) **STÖRLICHTBOGEN-SCHUTZVORRICHTUNG, INSBESONDERE FÜR NIEDERSPANNUNGS-SCHALTANLAGEN ZUR VERTEILUNG ELEKTRISCHER ENERGIE**
STRAY ARC PROTECTIVE DEVICE, ESPECIALLY FOR LOW-VOLTAGE SWITCHING INSTALLATIONS FOR DISTRIBUTING ELECTRIC POWER
DISPOSITIF DE PROTECTION CONTRE LES ARCS ELECTRIQUES PARASITES, NOTAMMENT POUR INSTALLATIONS DE DISTRIBUTION ELECTRIQUE BASSE TENSION

(30) Priorität: 09.02.1994 DE 4404074
(43) Veröffentlichungstag der Anmeldung: 22.10.1997
(73) Patentinhaber: Klöckner-Moeller GmbH, 53115 Bonn (DE)
(72) Erfinder: WEY, Paul, D-53111 Bonn (DE); BOROS, Ferenc, D-53819 Neunkirchen-Seelscheid (DE); BENCE, Laszló, H-1114 Budapest (HU); SZABO, Zoltan, H-1037 Budapest (HU); POKORNI, János, H-1119 Budapest (HU)
(86) Internationale Anmeldenummer: DE9500145
(87) Internationale Veröffentlichungsnummer: WO9522167

(56) Entgegenhaltungen:
- HU-A- 169 992
- US-A- 2 971 130
- US-A- 4 644 309

## Beschreibung

Die Erfindung betrifft eine Störlichtbogen-Schutzvorrichtung nach dem Oberbegriff des Anspruches 1.

In Niederspannungs-Schaltanlagen kann es durch immer höhere Leistungsdichten, Fehlschaltungen, Fehlhandlungen des Bedienpersonals, Überspannungen oder Geräteversagen zur Ausbildung von Störlichtbögen kommen.

Um Verletzungen von Personen und Materialschäden durch Störlichtbögen zu reduzieren, ist es bekannt, in der Verteilung von Elektrizität Lichtbogenerkennungseinrichtungen einzusetzen, die vorgeordnete Leistungsschalter zur schnellen Abschaltung veranlassen oder Störlichtbogen-Schutzvorrichtungen ansteuern, die einen definierten Kurzschluß verursachen, der jedoch für Personen und Anlage unschädlich ist. Die Dauer des Lichtbogens ist auf diese Weise um bis zu einem Zehntel, teilweise auch mehr reduziert, so daß große Schäden vermieden und das Ausmaß der Nutzung der Schaltanlage erhöht werden können.

Aus der HU 169992 ist es bekannt, zwei koaxial ineinander gesetzte metallische Zylindermäntel einzusetzen, wobei einer Betriebsspannung und der andere Nullpotential aufweist, die weiterhin unter der Wirkung einer Spule verformt und zusammengedrückt werden können, d.h. der innere nach außen und der äußere nach innen, bis diese einen satten Kurzschluß verursachen. Die Spule wird im Fehlerfall von einer Kondensatorbatterie gespeist, die durch ein Schaltelement zuschaltbar ist. Das Schaltelement wird durch eine Störlichtbogenerkennungseinrichtung bei einem Störlichtbogen angesteuert.

Um die Kondensatorbatterie unter anderem möglichst klein dimensionieren zu können, befinden sich beide Zylindermäntel in einem Vakuumbehälter, wodurch der Abstand zwischen beiden Zylindermänteln wesentlich verringert werden kann.

Der Vakuumbehälter muß hierbei relativ dick sein, so daß eine dennoch große Dimensionierung der Spule und insbesondere der Kondensatorbatterie erforderlich ist, was nicht nur teuer ist, sondern auch einen erheblichen Platzbedarf in der Schaltanlage fordert.

Aufgabe der Erfindung ist es deshalb, eine Störlichtbogen-Schutzvorrichtung nach dem Oberbegriff des Anspruches 1, derart zu verbessern, daß eine geringere Dimensionierung der Bauteile und insbesondere der Kondensatorbatterie erforderlich ist.

Die Aufgabe der Erfindung wird durch die Merkmale des Anspruches 1 gelöst, während in den Unteransprüchen besonders vorteilhafte Weiterbildungen der Erfindung gekennzeichnet sind.

Durch die Erfindung kann die Spule dicht an der Auslösepatrone angeordnet werden, so daß zum einen die Abmessungen der Spule verringert werden und zum anderen die Kondensatorbatterie kleiner dimensioniert werden kann.
Weiterhin ist sehr vorteilhaft, daß nur innerhalb des Rohrabschnittes ein Vakuum vorhanden ist, wodurch die gesamte Schutzvorrichtung kompakter ist.

Ebenso erweist sich die erfinderische Ausführung sehr vorteilhaft in bezug auf die Vakuumerzeugung und Vakuumerhaltung. So ist es neben einer relativ kostengünstigen Herstellung besonders wichtig, daß das in der Auslösepatrone vorhandene Vakuum auch nach 10 oder mehr Jahren erhalten bleibt, damit keine unerwünschten Stromüberschläge erfolgen bzw. damit die Schutzvorrichtung Wartungsfrei ist.

Durch die kennzeichnenden Merkmale der Ansprüche 2 bis 5 ergeben sich Montage- und Herstellungsvorteile, insbesondere in bezug auf die Vakuumerzeugung.

Damit das zweite Patronenteil stets mittig angeordnet ist und beide Patronenteile sicher gehalten sind, ist an der Stirnseite des zweiten Patronenteiles im ersten Abschnitt ein hutartiges Zentrierelement vorhanden, das mit seinem Zylinderteil an einer zentrischen Aussparung greift, die an dem zweiten Patronenteil vorhanden ist, wobei das Zentrierelement aus Isolierstoff besteht und in dem Rohrabschnitt des ersten Patonenteiles bündig eingebettet ist.

Für die Vakuumerzeugung und Zuverlässigkeit der Auslösepatrone, ist es besonders günstig, wenn die Stirnseiten des Isolierrohres von der äußeren Kante bis etwa zur Mitte bzw. Stufe mit einer Metallbeschichtung versehen sind, die Metallbeschichtung aus MoMn+Ni besteht und eine Dicke von 0,02 bis 0,03 mm, vorzugsweise 0,025 mm, aufweist und das Isolierrohr einen etwas größeren Durchmesser als der Kragen oder der Randsteg aufweist, weil hierdurch Keramikteile und Metallteile miteinander sicher verlötet werden können.

Niedrige Auslösezeiten bei sicherer Funktion ergibt sich in Niederspannungs-Schaltanlagen, wenn der Spalt zwischen beiden Patronenteile etwa 1mm beträgt.

Von besonderem Vorteil ist es, wenn die Spule in einem Isoliering aus Kunststoff, integriert bzw. eingebettet ist und dort eingegossen ist, wodurch die Spulenwindungen trotz hoher Kräfte, die beim Entladen des Energiespeichers auftreten, sicher gehalten werden und gleichzeitig isoliert sind.

Besonders günstig ist es, wenn in der Nähe des stromdurchflossenen Bereichs des Rohrabschnitts massive Teile aus gut wärmeleitenden Werkstoff vorhanden sind, weil die Wärme in diesem Bereich dann gut abgeführt werden kann.

Ein optimaler Kompromiß aus hoher Auslösegeschwindigkeit und hoher Stromtragfähigkeit beim Einsatz in Hauptverteilern, ergibt sich, wenn die Wandstärke des Rohrabschnittes 0,5mm bis 2,5mm, vorzugsweise 1mm, und sein Durchmesser 50mm bis 60 mm beträgt.

Anhand der Zeichnung, in der ein Ausführungsbeispiel dargestellt ist, sollen die Erfindung, weitere Ausgestaltungen und Verbesserungen der Erfindung und weitere Vorteile näher beschrieben und erläutert werden.

Es zeigt:
- Fig. 1: eine Schnittdarstellung der Auslösepatrone mit Spule im zusammengesetzten Zustand,
- Fig. 2: eine Schnittdarstellung des ersten Patronenteiles,
- Fig. 3: eine Schnittdarstellung des zweiten Patronenteiles,
- Fig. 4: eine Schnittdarstellung des Isolierrohres,
- Fig. 5: eine Einzelheitdarstellung des Isolierrohres
- Fig. 6: und eine Darstellung von der Anschlußseite.

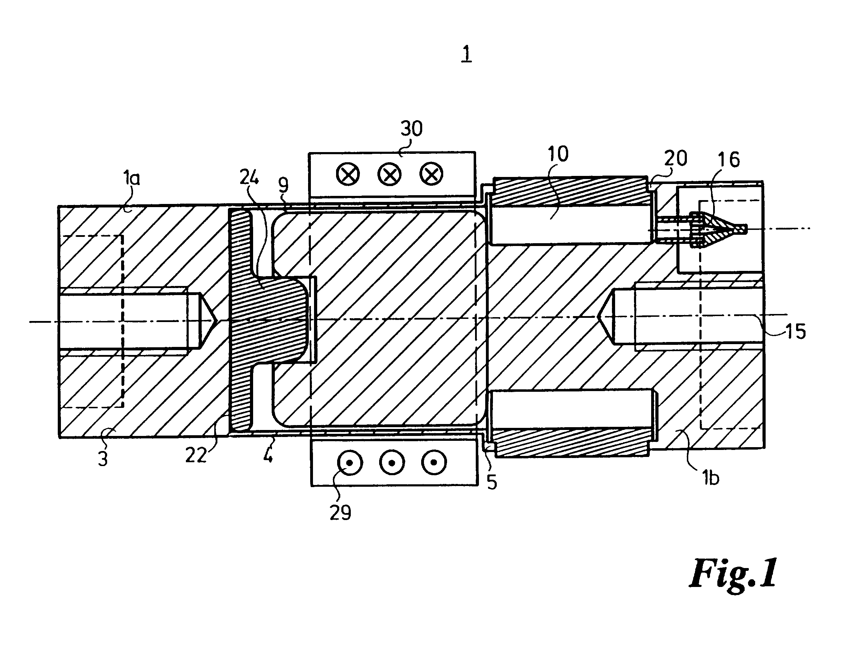

Die in der Fig. 1 dargestellte Auslösepatrone 1 besteht aus einem rotationssymmetrischen ersten Patronenteil 1a in becherartiger Form. Dieses Patronenteil besteht aus einem elektrisch leitenden Werkstoff, wie Kupfer oder Aluminium, und ist in einem geschlossenen Bodenbereich 3, einem zylindermantelförmigen Bereich bzw. Rohrabschnitt 4 und einem am anderen Ende nach außen geformten Kragen 5 aufgeteilt. Der Bodenbereich 3 ist derart dick, daß eine zentrische Gewindebohrung 6 für die Befestigung einer Anschlußschiene oder -kabels angeordnet sein kann.

Das erste Patronenteil 1a kann beispielsweise an Betriebsspannung anliegen, während ein zweites Patronenteil 1b Nullpotential aufweisen kann.

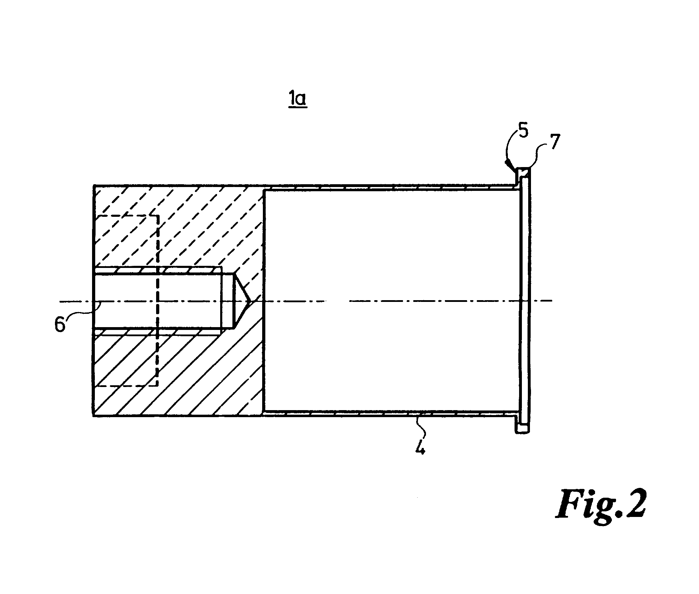

Der Kragen 6 des ersten Patronenteiles 1a, der in Fig. 2 als Einzelteil im Schnitt dargestellt ist, weist einen Befestigungsring 7 mit einer größeren Wandstärke als die Wandung des Rohrabschnittes 4 auf. Im Querschnitt ist der Kragen Z-förmig.
Die Dicke des Rohrabschnittes 4 muß einerseits derart dünn sein, daß sie leicht und schnell deformierbar ist, also daß der Rohrabschnitt 4 eine geringe Masse aufweist, und andererseits derart Dick sein, daß eine genügend hohe Stromtragfähigkeit erreicht wird. Besonders günstig ist es hierfür, wenn die Wandstärke des Rohrabschnittes etwa 1mm und sein Durchmesser 50 bis 60 mm beträgt.

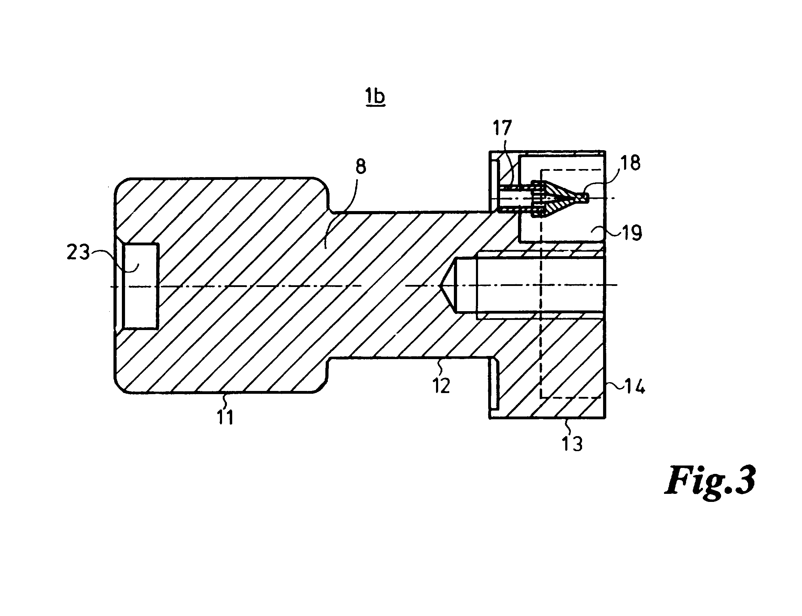

Das zweite Patronenteil 1b, ebenfalls aus Metall, besteht aus einem Zylinderteil 8, das, wie in den Figuren 2 und 3 gezeigt ist, an dem einen Ende einen ersten Durchmesser bzw. Abschnitt 11 aufweist, der jedoch kleiner als der Innendurchmesser des Rohrabschnittes 4 ist, so daß dieses Patronenteil 1b in das Patronenteil 1a mit einem Spalt 9 eingeführt werden kann.
Das Zylinderteil 8 ist in dem Bereich außerhalb des Rohrabschnittes 4 mit einem zweiten kleineren Durchmesser bzw. Abschnitt 12 versehen, so daß in diesem Bereich eine Vakuumkammer 10 entsteht.

An dem anderen Ende ist das Zylinderteil 8 mit einem dritten Durchmesser bzw. Abschnitt 13 versehen, der größer als die ersten beiden Durchmesser der Abschnitte 11 und 12 ist, so daß an diesem Ende ein scheibenartiger Deckel 14 als Verschlußdeckel für die Vakuumkammer 10 entsteht.

Der Deckel 14 ist, wie das erste Patronenteil 1a, mit einer Gewindebohrung 15 für die zweite Anschlußschiene oder -kabel versehen.
Im Bereich der Vakuumkammer 10 ist am Deckel 14 ein Ventil 16 für die Vakuumerzeugung angeordnet. Das Ventil besteht aus einem Saugrohr 17 und einer Verschlußkappe 18, die über das Saugrohr 17 gestülpt wird. Zum Anordnen des Ventils 16 ist der Deckel 14 mit einer Aussparung 19 versehen.

Das zweite Patronenteil 1b ist im Übergangsbereich zwischen dem zweiten 12 und dem dritten Abschnitt 13 an der Unterseite des Deckels 14 mit einem Randsteg 20 versehen, der den gleichen Außendurchmesser wie der Deckel 14 und der Befestigungsring 7 aufweist.

Zwischen dem Befestigungsring 7 und dem Randsteg 20 ist ein Isolierrohr 21 angeordnet, der beide Patronenteile 1a und 1b mechanisch verbindet und gleichzeitig aber elektrisch voneinander isoliert.

Das Isolierrohr 21 ist also zwischen dem Ende bzw. am offenen Ende des Rohrabschnittes 4 des Rohrabschnittes 1a und dem zweiten Patronenteil 1b angeordnet.

Das zweite Patronenteil 1b ist zwar in diesem Ausführungsbeispiel massiv, dieses kann aber auch hohl oder becherartig sein.

An der Stirnseite des zweiten Patronenteiles 1b im ersten Abschnitt 11 greift ein hutartiges Zentrierelement 22 mit seinem Zylinderteil 24 an einer zentrischen Aussparung 23, die an dem zweiten Patronenteil vorhanden ist, wobei das Zentrierelement 22 aus Isolierstoff besteht und in dem Rohrabschnitt 4 des ersten Patonenteiles 1a bündig eingebettet ist, wodurch beide Patronenteile 1a, 1b weiterhin voneinander isoliert und mechanisch gehalten werden.

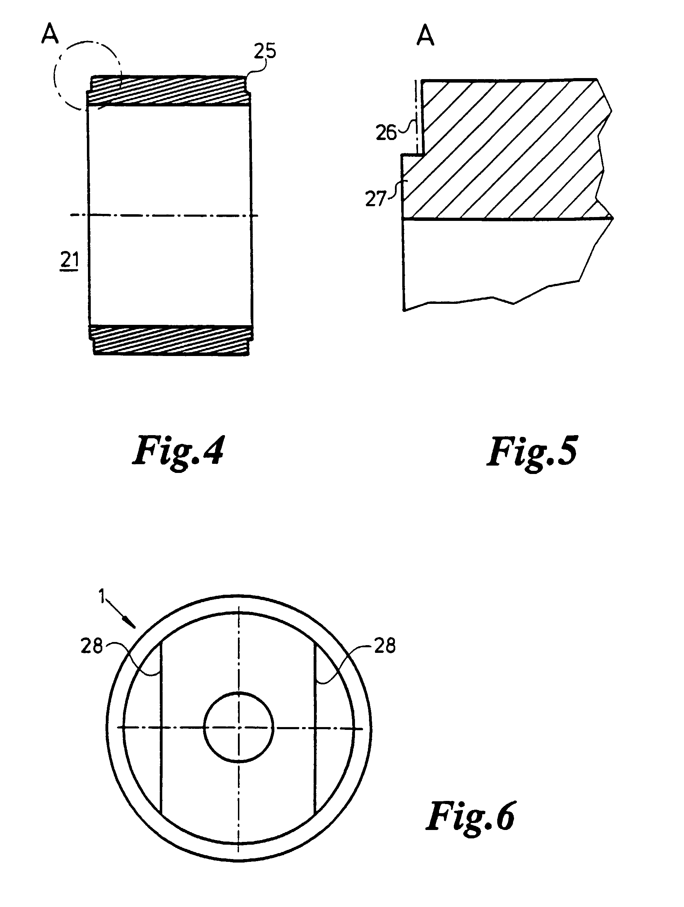

Das Isolierrohr 21, wie in den Figuren 4 und 5 näher dargestellt ist, ist an den Enden ringsherum mit jeweils einer treppenartige Abstufung 25 versehen, derart, daß der Kragen 5 an der einen Isolierrohrseite und der Randsteg 20 an der anderen Isolierrohrseite in die Abstufungen 20 greifen können.

Die Stirnseiten des Isolierrohres 21 sind von der äußeren Kante bis etwa zur Mitte bzw. Stufe 27 mit einer Metallbeschichtung versehen.

Im zusammengesetzten Zustand der Auslösepatrone 1 liegen die metallbeschichteten Flächen jeweils an den Patronenteile 1a, 1b satt an, um durch eine Lötverbindung eine vakuumdichte Patrone zu erreichen. Genauer liegt die linke metallbeschichtete Fläche an dem Kragen 5 des ersten Patronenteiles 1a und die rechte an dem Randsteg 20 des zweiten Patronenteiles 1b an, wobei die Stufe 27 innen und der Kragen 5 bzw. der Randsteg 20 außen liegt.
Das Isolierrohr 21 weist einen etwas größeren Durchmesser als der Kragen 5 oder der Randsteg 20 auf, wodurch das Lot entlang der Metallbeschichtung 26 durch Kapillarwirkung nach innen fließen kann und außen eine Art Vakuumdichtung bildet.

Im Bereich des ersten Abschnittes 11 des zweiten Patronenteiles 1b und des Rohrabschnittes 4 des ersten Patronenteiles, also des Spaltes 9 ist an dem Rohrabschnitt 4 eine isolierte Spule 29 direkt anliegend angeordnet.

Die Windungen der Spule 29 sind koaxial um die Auslösepatrone angeordnet, wie in der Fig. 1 dargestellt ist.
Die Spule 29 wird in einem Isoliering 30 aus Kunststoff, z.B. Polyurethan-Hartschaum, integriert bzw. eingebettet und dort eingegossen.

Beim Auslösen der Störlichtbogen-Schutzvorrichtung fließt von einem Energiespeicher kurzzeitig in die Spule 29 ein derart hoher Strom, daß in dem Rohrabschnitt 4 und dem ersten Abschnitt 11 des zweiten Patronenteiles 1b ein derart hoher Strom induziert wird, daß -aufgrund der Kraftwirkung infolge der induzierten Ströme- der Rohrabschnitt 4 gegen den ersten Abschnitt 11 bzw. gegen das zweite Patronenteil 1b gedrückt wird und der Spalt 9 in ein Bruchteil einer Millisekunde kurzgeschlossen wird, wobei ein Störlichtbogendetektor ein Thyristor ansteuert, das zwischen der Spule 29 und dem Energiespeicher angeordnet ist.

Der Spalt muß einerseits derart klein sein, daß die zu überwindende Strecke klein ist, um kurze Auslösezeiten zu erreichen und andererseits derart groß sein, daß kein Spannungs-bzw. Stromüberschlag erfolgen kann. Bei einer Spannung von 220/380 V weist der Spalt eine Breite von etwa 1mm auf, z.B. 0,7 bis 1,3 mm.

Nach einem Störlichtbogen fließt dann in der Nähe der Stromsammelschienen der Anlage ein Kurzschlußstrom und zwar jeweils von einer Stromschiene durch beide Patronenteile 1a, 1b wieder in die Stromschienen zurück, wodurch die Spannung völlig zusammenbricht und der Störlichtbogen gelöscht wird.

In der Nähe des stromdurchflossenen Bereichs des Rohrabschnitts 4 sind massive Teile aus gut wärmeleitenden Werkstoff vorhanden. Durch die massiven Teile, d.h. Bodenteil 3 und Abschnitt 11, wird die Wärme von dem freiliegenden Rohrabschnitt 4 in der Nähe des Zentrierteiles 22 schnell abgeführt, so daß eine derart hohe Stromtragfähigkeit erreicht wird, daß auch bei einem Versagen eines vorgeschalteten Leistungsschalters keine gefährliche Materialabschmelzung oder sogar ein Sekundärlichtbogen an der Auslösepatrone stattfinden kann.

Wie die Fig. 6 zeigt weisen die Stirnseiten der Auslösepatrone 1 senkrechte Greifflächen 28 für ein Montagewerkzeug, wie Maulschlüssel oder dergleichen.

Das Isolierrohr (21) ist vorzugsweise aus Keramik ausgeführt, es kann aber auch aus anderen geeigneten Isolierstoffen sein. Wie in der Fig. 1 zu sehen ist, ist das Isolierrohr (21) außerhalb der Spule (8) angeordnet.

Das Isolierrohr (21) kann weiterhin eine oder mehrere nicht gezeigte Rippen zur Vergrößerung der Kriechstrecke aufweisen.

Das Schaltelement, das bei einem Störlichtbogen den Strom in der Spule (29) zuschaltet, ist in diesem Ausführungsbeispiel ein Leistungsthyristor.

Die Auslösepatrone ist aufgrund der Vakuumkammer ebenso in der Mittelspannungstechnik zu verwenden, z.B. in einer Mittelspannungsschaltanlage.

## Patentansprüche

1. Störlichtbogen-Schutzvorrichtung (1), insbesondere für Niederspannungs-Schaltanlagen zur Verteilung elektrischer Energie, bestehend jeweils aus einem Energiespeicher, einer Spule (29), mindestens einem Störlichtbogendetektor, der ein zwischen der Spule (29) und dem Energiespeicher angeordnetes Schaltelement ansteuert, einer Auslösepatrone (1) mit einem Vakuum, die unter der Wirkung des von der Spule (29) erzeugten Induktionsstroms einen metallischen Kurzschluß erzeugt, **dadurch gekennzeichnet**, daß die Auslösepatrone (1) aus einem ersten becherartigen Patronenteil (1a) mit einem Rohrabschnitt (4) und aus einem zweiten Patronenteil (1b) besteht, daß ein Isolierrohr (21) oder Isolierring derart zwischen dem offenen Ende des Rohrabschnittes (4) des ersten Patronenteiles (1a) und dem zweiten Patronenteil (1b) angeordnet ist, daß beide Patronenteile (1a, 1b) zwar mechanisch verbunden aber voneinander elektrisch isoliert sind und daß die Spule (29) zur Auslösung direkt auf dem Rohrabschnitt (4) des ersten Patronenteiles (1a) angeordnet ist.

2. Störlichtbogen-Schutzvorrichtung nach Anspruch 1, dadurch gekennzeichnet, daß das ersten Patronenteil (1a) an dem einen Ende des zylindermantelförmigen Bereichs bzw. Rohrabschnitts (4) einen geschlossenen Bodenbereich (3) aufweist und an dem anderen Ende einen nach außen geformten Kragen (5) aufweist.

3. Störlichtbogen-Schutzvorrichtung nach Anspruch 1 oder 2, dadurch gekennzeichnet, daß das zweite Patronenteil (1b) aus einem Zylinderteil (8) besteht, welches an dem einen Ende einen ersten Durchmesser bzw. Abschnitt (11) aufweist, der jedoch kleiner als der Innendurchmesser des Rohrabschnittes (4) ist, so daß ein Spalt (9) entsteht, welches weiterhin außerhalb des Rohrabschnittes (4) mit einem zweiten kleineren Durchmesser bzw. Abschnitt (12) versehen ist, derart, daß in diesem Bereich eine Vakuumkammer (10) entsteht und welches an dem anderen Ende mit einem dritten Durchmesser bzw. Abschnitt (13) versehen ist, der größer als die ersten beiden Durchmesser der Abschnitte (11) und (12) ist, derart, daß an diesem Ende ein scheibenartiger Deckel (14) als Verschlußdeckel für die Vakuumkammer (10) entsteht.

4. Störlichtbogen-Schutzvorrichtung nach Anspruch 3, dadurch gekennzeichnet, daß der Deckel eine Aussparung (19) aufweist, in der ein Ventil (16) für die Vakuumerzeugung angeordnet ist, wobei das Ventil (16) aus einem Saugrohr (17) und einer Verschlußkappe (18) besteht.

5. Störlichtbogen-Schutzvorrichtung nach Anspruch 3 oder 4, dadurch gekennzeichnet, daß ein am ersten Patronenteil (1a) angeformter Kragen (5) ein Befestigungsring (7) mit einer größeren Wandstärke als die Wandung des Rohrabschnittes (4) aufweist, daß das zweite Patronenteil (1b) im Übergangsbereich zwischen dem zweiten (12) und dem dritten Abschnitt (13) an der Unterseite des Deckels (14) mit einem Randsteg (20) versehen ist, der den gleichen Außendurchmesser wie der Befestigungsring (7) aufweist und daß das Isolierrohr (21) zwischen dem Befestigungsring (7) und dem Randsteg (20) angeordnet ist, wobei das Isolierrohr (21) an den Enden ringsherum mit jeweils einer treppenartige Abstufung (25) versehen ist, derart, daß der Kragen (5) an der einen Isolierrohrseite und der Randsteg (20) an der anderen Isolierrohrseite in die Abstufungen (20) greifen können.

6. Störlichtbogen-Schutzvorrichtung nach einem der Ansprüche 3 bis 5, dadurch gekennzeichnet, daß an der Stirnseite des zweiten Patronenteiles (1b) im ersten Abschnitt (11) ein hutartiges Zentrierelement (22) vorhanden ist, das mit seinem Zylinderteil (24) an einer zentrischen Aussparung (23) greift, die an dem zweiten Patronenteil (2b) vorhanden ist, wobei das Zentrierelement (22) aus Isolierstoff besteht und in dem Rohrabschnitt (4) des ersten Patonenteiles (1a) bündig eingebettet ist.

7. Störlichtbogen-Schutzvorrichtung nach Anspruch 5 oder 6, dadurch gekennzeichnet, daß die Stirnseiten des Isolierrohres (21) von der äußeren Kante bis etwa zur Mitte bzw. Stufe (27) mit einer Metallbeschichtung (26) versehen sind und daß das Isolierrohr (21) einen etwas größeren Durchmesser als der Kragen (5) oder der Randsteg (20) aufweist.

8. Störlichtbogen-Schutzvorrichtung nach einem der vorhergehenden Ansprüche, dadurch gekennzeichnet, daß der Spalt zwischen beiden Patronenteilen (1a, 1b) etwa 1mm beträgt.

9. Störlichtbogen-Schutzvorrichtung nach einem der vorhergehenden Ansprüche, dadurch gekennzeichnet, daß die Spule (29) in einem Isoliering (30) aus Kunststoff, integriert bzw. eingebettet ist und dort eingegossen ist.

10. Störlichtbogen-Schutzvorrichtung nach einem der vorhergehenden Ansprüche, dadurch gekennzeichnet, daß in der Nähe des stromdurchflossenen Bereichs des Rohrabschnitts (4) massive Teile aus gut wärmeleitenden Werkstoff vorhanden sind.

11. Störlichtbogen-Schutzvorrichtung nach einem der vorhergehenden Ansprüche, dadurch gekennzeichnet, daß die Wandstärke des Rohrabschnittes (4) 0,5mm bis 1,5mm, vorzugsweise 1mm, und sein Durchmesser 50mm bis 60 mm beträgt.

12. Störlichtbogen-Schutzvorrichtung nach einem der vorhergehenden Ansprüche, dadurch gekennzeichnet, daß die Stirnseiten der Auslösepatrone (1) senkrechte Greifflächen (28) für ein Montagewerkzeug aufweisen.

13. Störlichtbogen-Schutzvorrichtung nach einem der vorhergehenden Ansprüche, dadurch gekennzeichnet, daß das Isolierrohr (21) aus Keramik besteht.

## Claims

1. Protective device against disturbing arcs (1), especially for low-voltage switchgear used for the distribution of electrical energy, each consisting of one energy store, of a coil (29), of at least one disturbing arc detector, which triggers a switching element located between the coil (29) and the energy store, of a triggering cartridge (1) that is subjected to a vacuum and creates a saturated short-circuit under the effect of the induction current generated by the coil (29), **characterized in that** the triggering cartridge (1) ) consists of a first cup-like cartridge part (1a) with a tube section (4), and of a second cartridge part (1b), that an insulating tube (21) or insulating ring is arranged between the open end of the tube section (4) of the first cartridge part (1a) and the second cartridge part (1b) in such a way that both cartridge parts (1a, 1b) are connected mechanically while being insulated from one another electrically, and that the coil (29) for triggering is located directly on the tube section (4) of the first cartridge part (1a).

2. Protective device against disturbing arcs as claimed in claim 1, **characterized in that** the first cartridge part (1a) presents a closed bottom area (3) at one of the ends of the section shaped like a cylinder jacket or, correspondingly, of the tube section (4), and a collar (5) protruding toward the outside at the other end.

3. Protective device against disturbing arcs as claimed in claim 1 or 2, **characterized in that** the second cartridge part (1b) consists of a cylinder part (8) which presents a first diameter or, correspondingly, section (11) located at one end but being smaller than the internal diameter of the tube section (4), thus creating a gap (9), which presents a second and smaller diameter or, correspondingly, section (12) located outside of the tube section (4) in addition to this and in such a way that a vacuum chamber (10) is created in this area, and which is provided with a third diameter or, correspondingly, section (13) that is greater than the two first diameters of sections (11) ) and (12) in such a way that a disk-like lid (14) is created at this end as a cover lid for the vacuum chamber (10).

4. Protective device against disturbing arcs as claimed in claim 3, **characterized in that** the lid presents a recess (19) which houses a valve (16) for vacuum generation, with the valve (16) consisting of a suction tube (19) and a closing cap (18).

5. Protective device against disturbing arcs as claimed in claim 3 or 4, **characterized in that** a collar (5) formed integral with the first cartridge part (1a) presents a fastening ring (7) which has a wall thickness greater than the wall of tube section (4), that the second cartridge part (1b) is provided with a rim web (20) which is located in the transition area between the second (12) and the third section (13) at the lower side of the lid (14) and which has the same external diameter as the fastening ring (7), and that the insulating tube (21) is arranged between the fastening ring (7) and the rim web (20), while the insulating tube (21) is provided with one step-like graduation (25) surrounding each of the ends in such a way that the collar (5) can engage in the graduations (20) at one side of the insulating tube and the rim web (20) can engage in the graduations (20) at the other side of the insulating tube.

6. Protective device against disturbing arcs as claimed in any claims 3 through 5, **characterized in that** a hat-like centring element (22) is provided in the first section (11) at the front side of the second cartridge part (1b) and engages in a centrical recess (23) by means of its cylinder part (24) while this recess (23) exists on the second cartridge part (2b), with the centring element (22) being made of insulating material and being embedded flush in the tube section (4) of the first cartridge part (1a).

7. Protective device against disturbing arcs as claimed in claim 5 or 6, **characterized in that** the front sides of the insulating tub (21) are provided with a metal coating (26) from the outside edge and approximately up to the centre or, correspondingly, up to step (27) and that the insulating tube (21) has a diameter which is slightly greater than the collar (5) or the rim web (20).

8. Protective device against disturbing arcs as claimed in any of the above-mentioned claims, **characterized in that** the gap between the two cartridge parts (1a, 1b) is approximately 1 mm.

9. Protective device against disturbing arcs as claimed in any of the above-mentioned claims, **characterized in that** the coil (29) is integrated or, correspondingly, embedded and cast-in in an insulation ring (30) made of synthetic material.

10. Protective device against disturbing arcs as claimed in any of the above-mentioned claims, **characterized in that** solid parts made of a material, which has a good capacity for heat conduction, are present close to the current-carrying part of tube section (4).

11. Protective device against disturbing arcs as claimed in any of the above-mentioned claims, **characterized in that** the wall thickness of tube section (4) is between 0.5mm and 1.5mm, and is preferably 1 mm, while its diameter is between 50mm and 60 mm.

12. Protective device against disturbing arcs as claimed in any of the above-mentioned claims, **characterized in that** the front sides of the triggering cartridge (1) present vertical gripping surfaces (28) for an assembly tool.

13. Protective device against disturbing arcs as claimed in any of the above-mentioned claims, **characterized in that** the insulating tube (21) is made of ceramic material.

## Revendications

1. Dispositif protecteur contre les arcs de lumière parasite (1), pour installations de distribution électrique à basse tension notamment, comportant respectivement un accumulateur d'énergie, une bobine (29), au moins un détecteur d'arcs de lumière parasite, lequel commande un élément de manoeuvre disposé entre la bobine (29) et l'accumulateur d'énergie, une cartouche de déclenchement (1) sous vide réalisant un court-circuit métallique sous l'action du courant inducteur produit par la bobine (29), **caractérisé en ce que** la cartouche de déclenchement (1) consiste en un premier segment (1a) en forme de boîtier avec une section tubulaire (4), et en un second segment (1b), et en ce qu'une douille d'isolation (21) ou un anneau d'isolation est disposé entre l'extrémité ouverte de la section tubulaire (4) du premier segment (1a) et le second segment (1b) de cartouche, de sorte que les deux segments (1a, 1b) soient reliés mécaniquement tout en étant électriquement isolés l'un de l'autre et que la bobine (29) soit à fin de déclenchement immédiatement disposée sur la section tubulaire (4) du premier segment de cartouche (1a).

2. Dispositif protecteur contre les arcs de lumière parasite selon revendication 1, **caractérisé en ce** que le premier segment de cartouche (1a) présente un fond fermé (3) sur une des extrémités de la zone formée en corps cylindrique ou de la section tubulaire (4), et une collerette (5) dépassant vers l'extérieur à l'autre extrémité.

3. Dispositif protecteur contre les arcs de lumière parasite selon revendication 1 ou 2, **caractérisé en ce que** le second segment de cartouche (1b) est composé d'une partie cylindrique (8), laquelle présente un premier diamètre ou tronçon (11) à l'une de ses extrémités, inférieur toutefois au diamètre intérieur de la section tubulaire (4), de sorte qu'est réalisé un interstice (9), ladite partie cylindrique étant à l'extérieur de la section tubulaire (4) également pourvue d'un second diamètre ou tronçon (12) de dimension inférieure, de sorte qu'une chambre à vide (10) est réalisée dans cette zone, ladite partie cylindrique étant enfin pourvue d'un troisième diamètre ou tronçon (13) à son autre extrémité, lequel est de dimension supérieure aux deux premiers diamètres des tronçons (11) et (12), de sorte qu'est réalisé à cette extrémité un couvercle en forme de disque (14) ayant fonction de couvercle d'obturation de la chambre à vide (10).

4. Dispositif protecteur contre les arcs de lumière parasite selon revendication 3, **caractérisé en ce que** le couvercle présente un évidement (19) où une soupape (16) est disposée pour la production du vide, ladite soupape (16) consistant en une tubulure d'aspiration (17) et un capuchon d'obturation (18).

5. Dispositif protecteur contre les arcs de lumière parasite selon revendication 3 ou 4, **caractérisé en ce que** la collerette (5) formée sur le premier segment de cartouche (la) présente un anneau de fixation (7) à épaisseur de paroi supérieure à la paroi de la section tubulaire (4), en ce que le second segment de cartouche (1b) est pourvu d'une nervure de bordure (20) dans la zone intermédiaire entre le second tronçon (12) et le troisième tronçon (13) sur la face inférieure du couvercle (14), ladite nervure présentant le même diamètre extérieur que l'anneau de fixation (7), et en ce que la douille d'isolation (21) est disposée entre l'anneau de fixation (7) et la nervure de bordure (20), la douille d'isolation (21) étant munie d'une gradation (25) sur le pourtour de chacune de ses extrémités, de sorte que la collerette (5), d'une part, et la nervure de bordure (20), d'autre part, peuvent avoir prise sur la gradation (25) de chaque côté de la douille d'isolation (21).

6. Dispositif protecteur contre les arcs de lumière parasite selon l'une des revendications 3 à 5, **caractérisé en ce qu'**un élément de centrage (22) en forme de chapeau est présenté dans le premier tronçon (11) sur la face frontale du second segment de cartouche (1b), ledit élément de centrage s'engageant par sa partie cylindrique (24) dans un évidement central (23) présenté sur le second segment de cartouche (1b), l'élément de centrage (22) étant réalisé en matière isolante et logé sans joint dans la section tubulaire (4) du premier segment de cartouche (1a).

7. Dispositif protecteur contre les arcs de lumière parasite selon revendication 5 ou 6, **caractérisé en ce que** les face frontales de la douille d'isolation (21) présentent un couchage métallisé (26), de leur bord extérieur à leur milieu environ ou jusqu'au gradin (27), et en ce que la douille d'isolation (21) présente un diamètre légèrement supérieur à la collerette (5) ou à la nervure de bordure (20).

8. Dispositif protecteur contre les arcs de lumière parasite selon l'une des revendications précédentes, **caractérisé en ce que** l'interstice entre les deux segments de cartouche (1a, 1b) est de 1 mm environ.

9. Dispositif protecteur contre les arcs de lumière parasite selon l'une des revendications précédentes, **caractérisé en ce que** la bobine (29) est intégrée ou logée dans un anneau d'isolation (30) en matière synthétique, et qu'elle y a été coulée.

10. Dispositif protecteur contre les arcs de lumière parasite selon l'une des revendications précédentes, **caractérisé en ce que** des pièces massives en matériau bon conducteur thermique sont présentées à proximité de la zone de circulation du courant de la section tubulaire (4).

11. Dispositif protecteur contre les arcs de lumière parasite selon l'une des revendications précédentes, **caractérisé en ce que** l'épaisseur de paroi de la section tubulaire (4) est de 0,5 mm à 1,5 mm, de 1 mm préférentiellement, et que son diamètre est de 50 mm à 60 mm.

12. Dispositif protecteur contre les arcs de lumière parasite selon l'une des revendications précédentes, **caractérisé en ce que** les faces frontales de la cartouche de déclenchement (1) présentent des surfaces de saisie verticales (28) pour un outil de montage.

13. Dispositif protecteur contre les arcs de lumière parasite selon l'une des revendications précédentes, **caractérisé en ce que** la douille d'isolation (21) est en céramique.
